# EUROPÄISCHE PATENTANMELDUNG

(11) **EP 3 594 057 A1**
(43) Veröffentlichungstag der Anmeldung: **15.01.2020**
(21) Anmeldenummer: 19185775.4
(22) Anmeldetag: 11.07.2019
(51) Int. Cl.: B60P 3/36, B60P 7/08, B60R 22/06, B60N 2/07

(54) **WOHNMOBIL**

(30) Priorität: 11.07.2018 DE 102018116807
(71) Anmelder: Hymer GmbH & Co. KG, 88339 Bad Waldsee (DE)
(72) Erfinder: Hein, Jochen, 88339 Bad Waldsee (DE); Sawetzki, Bernhard, 88364 Wolfegg (DE)
(74) Vertreter: Otten, Roth, Dobler & Partner mbB Patentanwälte

(57) **Zusammenfassung**

Vorgeschlagen wird ein Wohnmobil (1), umfassend einen Wohnausbau (2) und wenigstens ein im Wohnausbau (2) angeordnetes Möbel (6) und/oder Rückhaltesystem (3) für Fahrgäste, dadurch gekennzeichnet, dass wenigstens eine als Schnellverriegelung ausgebildete mehrfach lösbare Verbindung zwischen dem Möbel (6) oder dem Rückhaltesystem (3) und dem Wohnmobil (1), insbesondere einem Fahrzeugboden (4) des Wohnmobils (1) vorgesehen ist.

## Beschreibung

Die Erfindung betrifft ein Wohnmobil nach dem Oberbegriff des Anspruchs 1.

Es ist aus dem Stand der Technik bekannt, Wohnmobile mit Rückhaltesystemen für Fahrgäste auszustatten, um bei Unfällen etwaige Personenschäden möglichst gering halten zu können. Die Rückhaltesysteme sind dabei u.a. im Wohnbereich angeordnet. Dem Fachmann ist hierbei insbesondere geläufig, dass Rückhaltesysteme, z.B. Gurtböcke fest mit dem Wohnmobil, insbesondere mit dem Boden oder dem Chassis des Wohnmobils verbunden werden, um hieran weitere Sitzgelegenheiten anzubinden.

Gerade bei als Wohnmobilen ausgestalteten Fahrzeugen ist hierbei problematisch, dass die Rückhaltesysteme ein hohes Gewicht aufweisen und entsprechende Zulademöglichkeiten insofern verringert werden. Dies ist insbesondere dann von erheblichem Nachteil, falls neben Fahrer und Beifahrer eine flexible Anzahl an weiteren Insassen oder keine weiteren Insassen an Bord sind, die sich während der Fahrt im Wohnbereich, d.h. außerhalb einer Fahrgastzelle befinden.

Aus dem Stand der Technik ist es auch bekannt, in Wohnräumen von Wohnmobilen Möbel anzuordnen, um entsprechende Wohnqualitäten bereitstellen zu können. Nachteilig ist hieran beispielsweise, dass bestimmte Möbel, Möbelmodule oder dergleichen nicht permanent in Gebrauch sind bzw. nur begrenzte Nutzung aufweisen und somit zumindest teilweise unnötig in dem Wohnmobil angeordnet und entsprechend transportiert werden. Hierdurch entsteht ein erhöhter Treibstoffverbrauch in Folge eines Mehrgewichts sowie die fehlende Möglichkeit, den Stauraum im Wohnmobil, der durch das Möbel, Möbelmodul, etc. besetzt ist, anderweitig zu nutzen. Die Flexibilität der Nutzbarkeit des Wohnraums ist somit mitunter eingeschränkt.

Von besonderer Relevant sind die oben genannten Aspekte nicht nur bei den integrierten Wohnmobilen, sondern insbesondere auch bei sogenannten Freizeitfahrzeugen, welche i.d.R. auf der Basis ausgebauter Kastenwägen aufgebaut sind.

Die vorliegende Erfindung hat es sich somit zur Aufgabe gemacht, im Wohnbereich von Wohnmobilen bei Bedarf flexible Sitzmöglichkeiten mit entsprechenden Rückhaltesystemen sowie flexible Möbelanordnungen bereitzustellen.

Zur Lösung der Aufgabe wird daher ein Wohnmobil vorgeschlagen, umfassend einen Wohnausbau und wenigstens ein im Wohnausbau angeordnetes Möbel und/oder Rückhaltesystem für Fahrgäste.

Erfindungswesentlich ist, dass wenigstens eine als Schnellverriegelung ausgebildete mehrfach lösbare Verbindung zwischen dem Möbel und/oder dem Rückhaltesystem und dem Wohnmobil, insbesondere einem Fahrzeugboden des Wohnmobils vorgesehen ist.

Mittels einer Schnellverriegelung lässt sich das Rückhaltesystem oder das Möbel, sofern es nicht benötigt wird, mit vermindertem Montageaufwand entfernen, woraus eine hohe Flexibilität beim Personentransport und eine entsprechende Gewichtseinsparung resultieren kann. Weiterhin kann das Rückhaltesystem auch besonders einfach und schnell montiert werden, so dass ein Einbau beispielsweise durch einen Fachmann nicht mehr nötig ist, wodurch auch etwaige entstehende Kosten reduziert werden oder entfallen können. Besonders vorteilhaft ist weiterhin, dass ggf. zusätzlicher Stauraum bei einem entfernten bzw. nicht eingebauten Rückhaltesystem bereitgestellt bzw. anderweitig genutzt werden kann.

Eine besonders vorteilhafte Ausgestaltung der Erfindung kann vorsehen, dass die Schnellverriegelung als Steckverbindung ausgebildet ist. Steckverbindungen lassen sich leicht betätigen und insbesondere leicht lösen, so dass z.B. ein Ausbau bzw. eine Demontage des Rückhaltesystems besonders einfach und schnell erfolgen kann.

In einer vorteilhaften Ausgestaltung kann die Erfindung vorsehen, dass die Schnellverriegelung als Schienenverbindung, insbesondere als Eingriff in eine T-Nut Schiene ausgebildet ist. Eine derartige Verbindung ist sehr stabil und ermöglicht entsprechend hohe Sicherheitsanforderungen und ist zudem besonders einfach und kostengünstig nachrüstbar. Bevorzugt kann die T-Nut-Schiene dabei auch mehrere Profilnuten übereinander umfassen, welche insbesondere hinsichtlich der auftretenden Kippmomente eine verbesserte Stabilität aufweisen.

Eine weitere vorteilhafte Ausgestaltung der Erfindung kann vorsehen, dass das Rückhaltesystem insbesondere als Gurtbock ausgebildet und in einer Bodenschiene des Wohnmobils verschieblich angeordnet ist und/oder dass das Möbel in einer Bodenschiene des Wohnmobils verschieblich angeordnet ist. Damit kann das Rückhaltesystem und/oder das Möbel in verschiedenen Positionen im Wohnmobil angeordnet werden, wodurch eine besonders flexible Wohnraumnutzung im Wohnmobil ermöglicht werden kann.

In einer vorteilhaften Ausgestaltung der Erfindung kann vorgesehen sein, dass das Rückhaltesystem, insbesondere Gurtbock in einem Möbel, vorzugsweise Staukasten angeordnet ist, wobei das Möbel wiederum über die Schnellverbindung, z.B. über eine Schiene im Wohnmobil flexibel befestigt ist. Die Erfindung kann somit auch vorsehen, dass das Möbel als Staukasten ausgebildet ist. Die derartige Anordnung des Rückhaltesystems kann vorteilhaft zu einer flexiblen Wohnraumgestaltung bzw. Wohnraumnutzung im Wohnmobil beitragen, da das Rückhaltesystem zum Beispiel bei Nichtgebrauch im Möbel verstaut werden kann.

In einer weiteren vorteilhaften Ausgestaltung der Erfindung kann vorgesehen sein, dass die Bodenschiene als medienführende, insbesondere stromführende Bodenschiene ausgebildet ist. Sofern z.B. Rückhaltesystem und/oder Möbel entsprechende elektrische Versorgungen vorsehen, kann eine Bodenschiene erhöhter Funktionalität bereitgestellt werden, die es zudem ermöglicht, dass entsprechend separate Verlegungen der dafür benötigten elektrischen Leitungen im Wohnmobil mitunter hinfällig sind.

Eine weitere Ausgestaltung der Erfindung kann vorsehen, dass die Bodenschiene als Doppelschiene mit stromführender und/oder leitungsführender Schiene und Befestigungsschiene ausgebildet ist. Hierdurch kann die Funktionalität der Bodenschiene weiter erhöht werden.

Um eine Bodenschiene mit besonders hoher Funktionalität bereitstellen zu können, kann in einer Ausgestaltung der Erfindung auch vorgesehen sein, dass die Bodenschiene ein erstes kanalartiges Führungsmittel zum beweglichen Führen eines zum Befestigen des Möbels und/oder Rückhaltesystems ausgestalteten Befestigungsmittels sowie ein zweites kanalartiges Führungsmittel umfasst, wobei das zweite kanalartige Führungsmittel zur Aufnahme wenigstens einer elektrischen Leitung ausgebildet ist und vorzugsweise eine elektrische Leitung umfasst.

Nachfolgend wird die Erfindung anhand von Zeichnungen näher erläutert. Hierbei zeigt
- Figur 1:: eine stark vereinfachte schematische Darstellung eines Ausschnitts einer Ausgestaltung eines erfindungsgemäßen Wohnmobils;
- Figur 2:: eine stark vereinfachte schematische Darstellung eines Ausschnitts einer weiteren Ausgestaltung eines erfindungsgemäßen Wohnmobils.
- Figur 3a und 3b:: exemplatische Darstellung in Perspektive und Draufsicht dreier möglicher Varianten einer Befestigungsschiene;
- Figur 4a, 4b und 4c:: Querschnitte der Schienen aus Fig. 3.

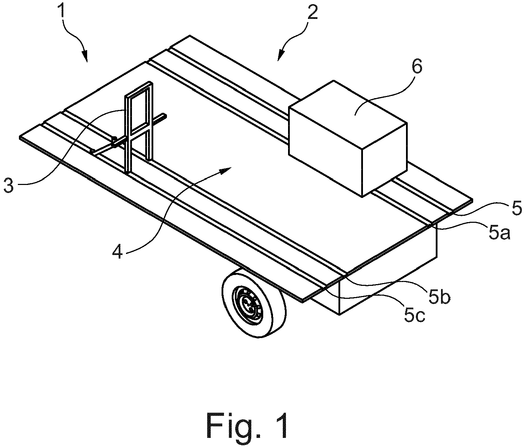

In der Figur 1 ist in stark vereinfachter schematischer Darstellung ein Teil eines Wohnmobils (1) dargestellt, welches einen Wohnausbau (2) und im Wohnausbau (2) angeordnetes Möbel (6) und Rückhaltesystem (3) für Fahrgäste umfasst. Ein Rückhaltesystem (3) ist vorliegend gleichermaßen stark vereinfacht und lediglich schematisch dargestellt und vorliegend als so genannter Gurtbock ausgestaltet. Das Möbel (6) ist ebenfalls stark vereinfacht und lediglich schematisch dargestellt. Die Erfindung sieht vor, dass eine als Schnellverriegelung ausgebildete mehrfach lösbare Verbindung zwischen dem Möbel (6) und/oder dem Rückhaltesystem (3) und dem Wohnmobil (1) vorgesehen ist. Hierdurch lassen sich Rückhaltesystem (3) und/oder Möbel (6), sofern es nicht benötigt wird, mit vermindertem Montageaufwand entfernen und/oder verschieben, woraus eine hohe Flexibilität der Nutzbarkeit des Wohnmobils (1) und bei Entnahme eine entsprechende Gewichtseinsparung resultieren kann. Damit kann ggf. zusätzlicher Stauraum bei nicht eingebautem Rückhaltesystem (3) und/oder Möbel (6) anderweitig genutzt werden kann.

Im Ausführungsbeispiel gemäß Figur 1 sind Rückhaltesystem (3) und Möbel (6) jeweils in einer Bodenschiene (5, 5a, 5b, 5c) des Wohnmobils (1) verschieblich angeordnet und können bei Bedarf entsprechend verschoben bzw. gänzlich entfernt werden. Dadurch kann eine besonders flexible Wohnraumnutzung im Wohnmobil (1) ermöglicht werden. Die Bodenschienen (5, 5a, 5b, 5c) sind im Fahrzeugboden (4) integriert, wodurch eine erhöhte Stabilität der Befestigung beispielsweise des Möbels (6) und/oder des Rückhaltesystems (3) resultieren kann.

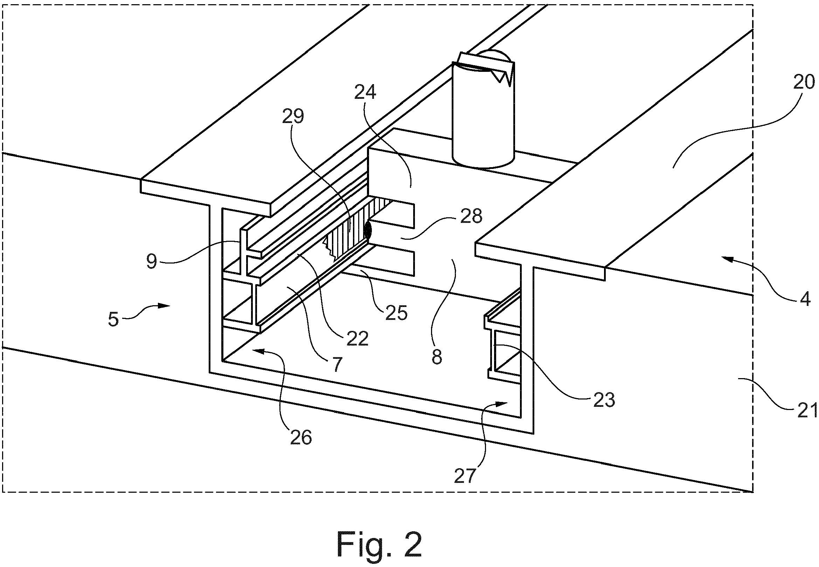

Aus der Figur 2 ist ersichtlich, dass die Bodenschiene (5, 5a, 5b, 5c) ein erstes kanalartiges Führungsmittel (7) zum beweglichen Führen eines zum Befestigen des Möbels und/oder Rückhaltesystems (3) ausgestalteten Befestigungsmittels (8) sowie ein zweites kanalartiges Führungsmittel (9) umfasst, wobei das zweite kanalartige Führungsmittel (9) zur Aufnahme wenigstens einer elektrischen Leitung ausgebildet ist. Auf diese Weise lassen sich Befestigung eines Möbels und/oder eines Rückhaltesystems im Wohnbereich eines Wohnmobils bei gleichzeitiger Bereitstellung einer elektrischen Leitung oder dergleichen Versorgung ermöglichen.

Das in Fig. 2 dargestellte Schienenprofil 20 ist in den Laufboden 4,21 eines Wohnmobils eingelassen und bündig versenkt. Das Profil 20 kann dabei eingeklebt und/oder durch Schrauben oder dergleichen fixiert sein, so dass es eine dauerhafte und zugfeste Verbindung darstellt, um die notwendigen Kräfte z.B. eines Möbels oder eines Gurtbocks aufzunehmen und einzuleiten.

Im Inneren T-Nut Bereich des Schienenprofils 20 sind Innenstrukturen 22 und 23 ausgebildet, welche unter anderem die kanalartigen Führungsmittel 7 und 9 umfassen. Dis Innenstrukturen sind vorliegend gegenüber einer vertikalen Längsebene asymmetrisch ausgebildet und können somit linkswie rechtsseitig unterschiedliche Funktionen ausfüllen.

Das als Läufer 24 ausgebildete Befestigungsmittel 8 greift mit einem unteren Schenkel 25 unter die Innenstrukturen 22 und 23 in die Profilnuten 26 und 27 ein und erzielt damit den einer T-Nut innewohnenden Formschluss gegen Anheben.

Ein über dem unteren Schenkel 25 angeordneter Kupplungsschenkel 28 kann wieder um über eine vorliegend nicht schematisch dargestellte Anbindung an z.B. eine Stromschiene 29 in dem kanalartigen Führungsmittel 7 eine Medienkupplung z.B. für Stromversorgung oder Signale ausbilden. Damit kann z.B. eine Position des Läufers 24 erfasst werden oder ein befestigtes Bauteil mit Strom versorgt werden.

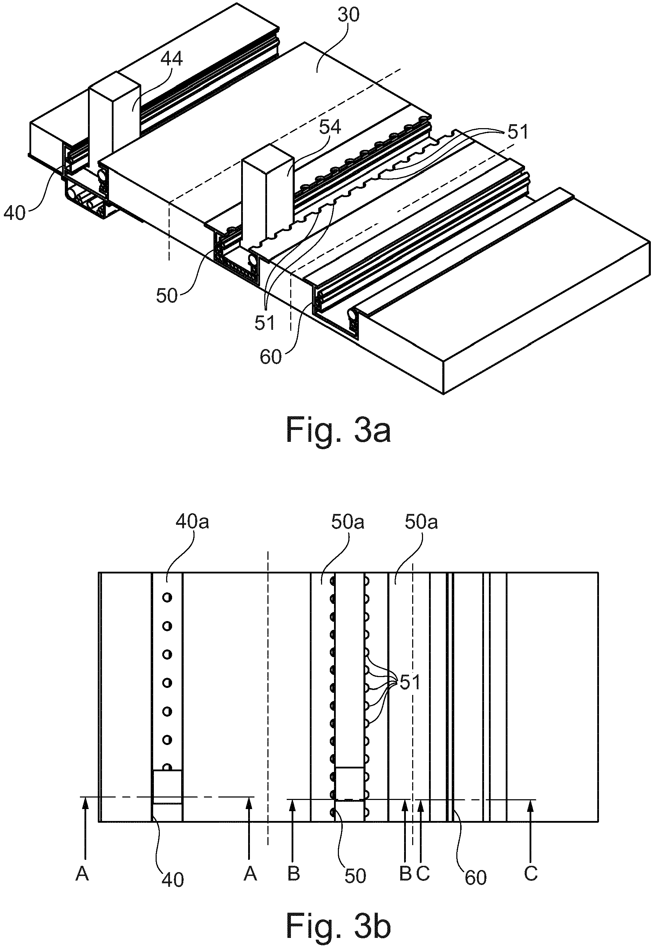

Fig. 3a zeigt einen Ausschnitt aus einem Boden 30 eines Wohnmobils, in welchen exemplarisch drei Varianten von Befestigungsschienen 40, 50 und 60eingebaut sind. Die Varianten der Befestigungsschienen 40, 50 und 60 sind in der Praxis kombinierbar oder je nach Einsatzweck auch einzeln verbaubar und stellen für sich gesehen voneinander unabhängige Ausführungsformen dar. In Fig. 3a sind die Einbauten daher durch gestrichelte Linien getrennt.

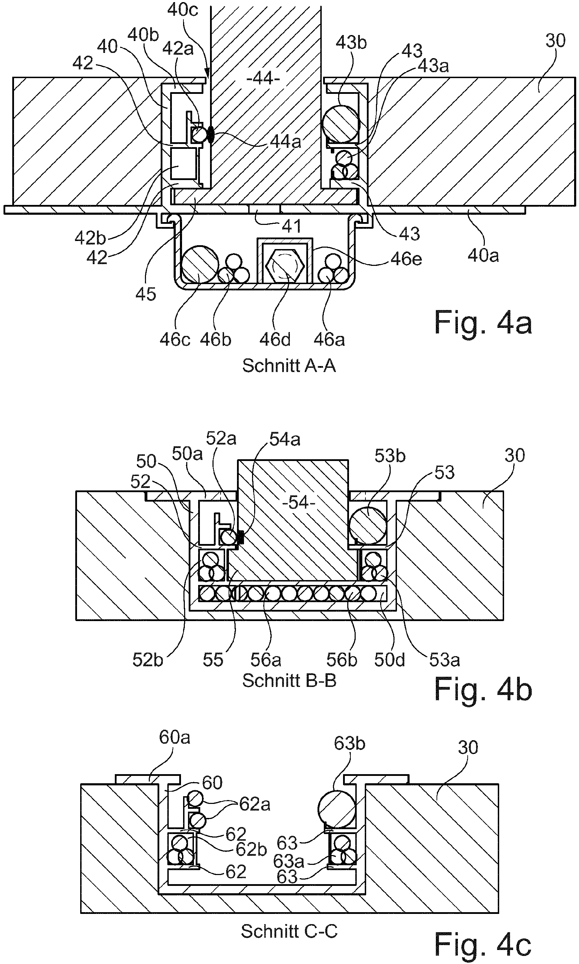

In den Schienen 40 und 50 ist vorliegend je ein Läufer 44 bzw. 54 dargestellt, welcher zur Befestigung von anzuordnenden Möbeln oder z.B. eines Gurtbocks dient (nicht dargestellt). Details zu den Querschnitten der Profile sind nachfolgend in Fig. 4a, 4b und 4c näher erläutert.

Fig. 3b zeigt eine Draufsicht auf die Anordnung nach Fig. 3a. Dargestellt sind im Boden 40a in der Befestigungsschiene 40 vorgesehene Rastbohrungen 41, in welche ein Raststift (nicht dargestellt) des Läufers 44 in definierten Positionen einrasten kann, um die Position gegen eine Längsverschiebung entlang der Schiene 40 zu verriegeln.

In der Befestigungsschiene 50 wird eine entsprechende Verriegelung durch im Dach 50a der Befestigungsschiene 50 vorgesehene Rastmulden 51 ausgebildet. Der Läufer 54 kann durch entsprechende Rastelemente seitlich, von unten oder von oben her in diese Rastmulden 51 eingreifen, und damit ebenfalls eine Längsverschiebung verriegeln.

Die Variante der Befestigungsschiene 60 umfasst vorliegend dargestellt keine zusätzlichen Elemente zur Verriegelung gegen Längsverschiebung, da ein Läufer ggf. durch Spannmittel arretiert und kraftschlüssig in Position gehalten werden kann.

Fig. 4a zeigt einen Schnitt durch die in Fig. 3b dargestellte Schnittlinie A-A. Dargestellt ist eine Ausfühungsform der der Befestigungsschiene 40. Das Profil der Befestigungsschiene 40 ist dabei von unten in eine Ausnehmung in einem Laufboden 30 eingesetzt. Der Schienenboden 40a untergreift den Laufboden 30 und ist z.B. durch Verklebung und/oder Verschraubung an diesem befestigt. Auf der Oberfläche des Laufbodens übergreift dieser die Oberseite 40b der Befestigungsschiene 40 und verdeckt diese bis auf die Ausnehmung 40c zur Durchführung des Läufers 44.

Im Innenbereich der Befestigungsschiene 40 sind Innenstrukturen 42 und 43 ausgebildet, welche verschiedenen Funktionen dienen. Exemplarisch sind auf der Innenstruktur 43 Anordnungen von elektrischen Leitungen 43a oder Fluidleitungen (z.B. Wasser) 43b dargestellt, welche entlang des Profils der Befestigungsschiene 40 geführt werden können. Auch eine elektrische Kontaktierung 42a, mittels eines am Läufer angeordneten Schleifkontakts 44a oder in andersartiger Ausbildung ist über die Innenstrukturen realisierbar.

Weitere Leitungsführungen oder dergleichen sind auch in dem Hohlraum 42b denkbar.

Der Läufer 44 umfasst an seinem unteren Ende einen Schenkel 45, welcher in die Profilnut unterhalb der Innenstrukturen 42 und 43 eingreift und die mechanische Stabilität bereit stellt.

Unterhalb des Schienenbodens 40a ist eine Traverse 40d aufgehängt, welche ebenfalls zur Aufnahme und Führung von Leitungen z.B. für elektrische Signale 46a, Elektrizität 46b und andere Medien wie z.B. Wasser 46c etc. dienen kann. Durch entsprechende Ausbildung der Traverse können auch darin abgeschlossene, insbesondere abgedichtete Bereiche 46e z.B. für Gasleitungen 46d geschaffen werden.

Fig. 4b zeigt einen Schnitt durch die in Fig. 3b dargestellte Schnittlinie B-B. Dargestellt ist eine Ausfühungsform der der Befestigungsschiene 50. Das Profil der Befestigungsschiene 50 ist dabei von oben in eine Ausnehmung in einem Laufboden 30 eingesetzt. Das Schienendach 50a schließt dabei mit dem Laufboden 30 bündig ab und ist z.B. durch Verklebung und/oder Verschraubung an diesem befestigt. Das Schienendach 50a der Befestigungsschiene 50 bildet damit die Ausnehmung 50c zur Durchführung des Läufers 54.

Im Innenbereich der Befestigungsschiene 50 sind Innenstrukturen 52 und 53 ausgebildet, welche verschiedenen Funktionen dienen. Exemplarisch sind auf der Innenstruktur 53 Anordnungen von elektrischen Leitungen 53a oder Fluidleitungen (z.B. Wasser) 53b dargestellt, welche entlang des Profils der Befestigungsschiene 50 geführt werden können. Auch eine elektrische Kontaktierung 52a, mittels eines am Läufer angeordneten Schleifkontakts 54a oder in andersartiger Ausbildung ist über die Innenstrukturen realisierbar.

Weitere Leitungsführungen oder dergleichen sind auch in dem Hohlraum 52b denkbar.

Der Läufer 54 umfasst an seinem unteren Ende einen Schenkel 55, welcher in die Profilnut unterhalb der Innenstrukturen 52 und 53 zumindest teilweise eingreift und die mechanische Stabilität bereit stellt.

Unterhalb des Läufers 54 ist ein Hohlraum 50d aufsgebildet, welche ebenfalls zur Aufnahme und Führung von Leitungen z.B. für elektrische Signale 56a, Elektrizität 56b oder dergleichen dienen kann.

Fig. 4c zeigt eine im Wesentlichen der Fig. 4b entsprechende Ausführungsform einer Befestigungsschiene 60, wobei die Befestigungsschiene 60 derart in eine Ausnehmung im Laufboden 30 eingesetzt ist, dass das Schienendach 60a nicht versenkt, sondern auf dem Laufboden aufliegend angeordnet ist. Entsprechende Bestandteile sind mit entsprechenden Bezugszeichen versehen. Auf die Beschreibung der Fig. 4a und 4b wird Bezug genommen.

### Bezugszeichenliste:

- 1: Wohnmobil
- 2: Wohnausbau
- 3: Rückhaltesystem
- 4: Fahrzeugboden
- 5: Bodenschiene
- 6: Möbel
- 7: erstes Führungsmittel
- 8: Befestigungsmittel
- 9: zweites Führungsmittel
- 20: Schienenprofil
- 21: Laufboden
- 22: Innenstruktur (links)
- 23: Innenstruktur (rechts)
- 24: Läufer
- 25: Schenkel
- 26: Profilnut (links)
- 27: Profilnut (rechts)
- 28: Kupplungsschenkel
- 29: Stromschiene
- 30: Laufboden
- 40: Befestigungsschiene
- 40a: Schienenboden
- 40b: Oberseite
- 40c: Ausnehmung
- 40d: Traverse
- 41: Rastbohrungen
- 42: Innenstruktur (links)
- 42a: elektr. Kontakt
- 42b: Hohlraum
- 43: Innenstruktur (rechts)
- 43a: elektr. Leiter
- 43b: Fluidleitung
- 44: Läufer
- 44a: Schleifkontakt
- 45: Schenkel
- 46a: Signalleitungen
- 46b: Stromleitungen
- 46c: Fluidleitung (z.B.Wasser)
- 46d: Fluidleitung (z.B. Gas)
- 46e: abgeschlossener Bereich
- 50: Befestigungsschiene
- 50a: Schienendach
- 51: Rastmulden
- 52: Innenstruktur (links)
- 52a: elektr. Kontakt
- 52b: Hohlraum
- 53: Innenstruktur (rechts)
- 53a: elektr. Leiter
- 53b: Fluidleitung
- 54: Läufer
- 54a: Schleifkontakt
- 55: Schenkel
- 56a: Signalleitungen
- 56b: Stromleitungen
- 60: Befestigungsschiene
- 60a: Schienendach
- 62: Innenstruktur (links)
- 62a: elektr. Kontakt
- 62b: Hohlraum
- 63: Innenstruktur (rechts)
- 63a: elektr. Leiter
- 63b: Fluidleitung

## Patentansprüche

1. Wohnmobil (1), umfassend einen Wohnausbau (2) und wenigstens ein im Wohnausbau (2) angeordnetes Möbel (6) und/oder Rückhaltesystem (3) für Fahrgäste,
**dadurch gekennzeichnet, dass**
wenigstens eine als Schnellverriegelung ausgebildete mehrfach lösbare Verbindung zwischen dem Möbel (6) und/oder dem Rückhaltesystem (3) und dem Wohnmobil (1), insbesondere einem Fahrzeugboden (4) des Wohnmobils (1) vorgesehen ist.

2. Wohnmobil (1) nach Anspruch 1, **dadurch gekennzeichnet, dass** die Schnellverriegelung als Steckverbindung ausgebildet ist.

3. Wohnmobil (1) nach Anspruch 1 oder 2, **dadurch gekennzeichnet, dass** die Schnellverriegelung als Schienenverbindung, insbesondere als Eingriff in eine T-Nut Schiene ausgebildet ist.

4. Wohnmobil (1) nach einem der vorangehenden Ansprüche, **dadurch gekennzeichnet, dass** das Rückhaltesystem (3), insbesondere Gurtbock in dem (6) Möbel, vorzugsweise Staukasten angeordnet ist.

5. Wohnmobil (1) nach einem der vorangehenden Ansprüche, **dadurch gekennzeichnet, dass** das Rückhaltesystem (3) insbesondere als Gurtbock ausgebildet und in einer Bodenschiene (5, 5a, 5b, 5c) des Wohnmobils (1) verschieblich angeordnet ist und/oder dass das Möbel (6) in einer Bodenschiene (5, 5a, 5b, 5c) des Wohnmobils (1) verschieblich angeordnet ist.

6. Wohnmobil (1) nach Anspruch 5, **dadurch gekennzeichnet, dass** die Bodenschiene (5, 5a, 5b, 5c) als stromführende Bodenschiene ausgebildet ist, insbesondere eine elektrische Kupplung zur Kontaktierung des Möbels und/oder des Rückhaltesystems umfasst.

7. Wohnmobil (1) nach Anspruch 5 oder 6, **dadurch gekennzeichnet, dass** die Bodenschiene (5, 5a, 5b, 5c) als Doppelschiene mit stromführender und/oder leitungsführender Schiene und Befestigungsschiene ausgebildet ist, insbesondere eine elektrische Kupplung zur Kontaktierung des Möbels und/oder des Rückhaltesystems umfasst.

8. Wohnmobil (1) nach einem der Ansprüche 4 bis 7, **dadurch gekennzeichnet, dass** die Bodenschiene (5, 5a, 5b, 5c) ein erstes kanalartiges Führungsmittel (7) zum beweglichen Führen eines zum Befestigen des Möbels und/oder Rückhaltesystems (3) ausgestalteten Befestigungsmittels (8) sowie ein zweites kanalartiges Führungsmittel (9) umfasst, wobei das zweite kanalartige Führungsmittel (9) zur Aufnahme wenigstens einer elektrischen Leitung ausgebildet ist und vorzugsweise eine elektrische Leitung umfasst.

9. Wohnmobil nach einem der vorangegangenen Ansprüche, **dadurch gekennzeichnet, dass** die Schnellverriegelung einen Läufer und eine Profilschiene, insbesondere eine als T-Nut Profilschiene ausgebildete Profilschiene umfasst.

10. Wohnmobil nach Anspruch 9, **dadurch gekennzeichnet, dass** die Profilschiene in der Profilschiene ausgebildete Innenprofile umfasst.

11. Wohnmobil nach Anspruch 10, **dadurch gekennzeichnet, dass** die Innenprofile gegenüber eine Längsachse der Profilschiene asymmetrisch, insbesondere links- sowie rechtsseitig unterschiedlich ausgebildet sind, bevorzugt zur Ausbildung unterschiedlicher Aufnahmebereiche für Leitungen ausgebildet sind.

12. Wohnmobil nach einem der vorangegangenen Ansprüche 9 bis 11, **dadurch gekennzeichnet, dass** unterhalb des Läufers eine Aufnahme für Leitungen ausgebildet ist, wobei bevorzugt die Aufnahme als Kanal und/oder als Traverse ausgebildet ist.

13. Wohnmobil nach einem der Ansprüche 9 bis 12, **dadurch gekennzeichnet, dass** die Profilschiene unterhalb einer Laufbodenebene angeordnet, insbesondere von unten in den Laufboden eingebracht angeordnet ist.

14. Wohnmobil nach einem der Ansprüche 9 bis 12, **dadurch gekennzeichnet, dass** die Profilschiene oberhalb oder in einer Laufbodenebene angeordnet, insbesondere von oben in den Laufboden eingebracht, besonders bevorzugt mit der Laufbodenebene bündig angeordnet ist.
